# EUROPEAN PATENT SPECIFICATION

(11) **EP 2 505 304 B1**
(45) Date of publication and mention of the grant of the patent: **23.10.2013**
(21) Application number: 12159882.5
(22) Date of filing: 16.03.2012
(51) Int. Cl.: B23Q 3/155, B23Q 3/157

(54) **Tool changing device and working machine including tool changing device**
Vorrichtung zum Auswechseln eines Werkzeugs und Arbeitsmaschine damit
Dispositif de changement d'outil et machine de travail comprenant le dispositif de changement d'outil

(30) Priority: 31.03.2011 JP 2011077364
(43) Date of publication of application: 03.10.2012
(73) Proprietor: Brother Kogyo Kabushiki Kaisha, Nagoya-shi, Aichi 467-8561 (JP)
(72) Inventor: Ishibashi, Nobuaki, Nagoya-shi, Aichi 467-8562 (JP); Nagashima, Ken, Nagoya-shi, Aichi 467-8562 (JP)
(74) Representative: Prüfer & Partner GbR European Patent Attorneys

(56) References cited:
- US-A- 3 074 147
- US-A- 3 174 222
- US-A- 3 286 344
- US-A- 3 818 580
- US-A- 4 238 034

## Description

### Technical Field

The present invention relates to a tool changing device that exchanges tools between a main shaft of working machine and a tool magazine, and to a working machine.

### Related Art

A working machine performs various working processes such as milling and thread cutting in accordance with a machining shape of a workpiece by a single device. The working machine includes a tool magazine holding a plurality of tools such as a drill, an end mill and a tap, and an ATC (Automatic Tool Changer). The ATC automatically exchanges tools between the tool magazine and the main shaft (see Japanese Patent Application Laid-Open No. 63-312038, for example).

A conventional tool changing device is provided with a tool magazine arranged adjacent to a base. The tool changing device exchanges tools by moving a column supporting a main shaft head to a fixed position of the tool magazine.

Since a conventional working machine needs the moving operation of column, time required for changing tools (tool changing time) is increased.

A tool changing device in which a tool magazine is attached to a column may shorten the tool changing time. Such a device, however, may be increased in its weight because the tool magazine holds a plurality of tools. In this case, the weight of column may be imbalanced depending on the attachment position of the tool magazine to the column. Therefore, the accuracy of positioning control for the column may be lowered.

Document US 3 074 147 A or US 3 174 222 A respectively discloses a material working machine or a tool changing machine tool having a tool changing device according to the preamble of claim 1.

### Summary of the Invention

An object of the present invention is to prevent deterioration in the accuracy of column positioning control and increase in the time required for changing tools.

A tool changing device according to a first aspect includes: a column provided to be movable on a base of the working machine; a main shaft head provided to the column so as to be able to move upward and downward; a main shaft rotatably supported by the main shaft head and detachably holding a tool; a plurality of grip arms each having a grip portion holding the tool; and a magazine body provided with the plurality of grip arms at an outer circumference of the magazine body and rotatably supported around one shaft line by the column, the tool changing device allocating the tool held by the grip portion of each of the plurality of grip arms to a position at which the tool can be attached to a lower end of the main shaft by rotation of the magazine body. The magazine body is formed to have an annular shape enclosing an outer circumference of the column.

The annular magazine body is supported by the column so as to enclose the outer circumference of the column. According to the tool changing device, the barycentric position of the column in a state where the tool magazine is attached can be made closer to the barycentric position of the column in a state where the tool magazine is not attached. The tool changing device can suppress imbalance in the weight of the column by attaching the tool magazine to the column. The tool changing device can, therefore, prevent deterioration in the accuracy of positioning control for the movement of the column.

According to the tool changing device of a second aspect, the main shaft head is provided at the column such that the main shaft head can move upward and downward along an inside of the magazine body fixed to the column so as to enclose the outer circumference of the column.

The annular magazine body is supported by the column so as to enclose the outer circumference of the main shaft head arranged at the column. The tool changing device can, therefore, have an increased length of the outer circumference of the magazine body and hold a large number of tools.

According to the tool changing device, the magazine body is fixed to the column in such a manner that the shaft line is inclined toward the main shaft head with respect to a vertical line.

The rotation shaft line of the magazine body is inclined toward the side of the main shaft head with respect to the vertical line. That is, the column supports the magazine body in such a manner that it is inclined with respect to the horizontal surface. The tool held by the magazine body through the grip arm extends in a direction perpendicular to the horizontal surface at the attachment position to the main shaft. The rotation shaft line of the magazine body is inclined toward the side of the main shaft head with respect to the vertical line, so that the end of the tool held by the grip arm is positioned outside the outer circumference of the magazine body. The grip arm holds the tool at a position below the outer circumference of the magazine body in the vertical direction. Hence, the tool changing device can hold a larger number of tools.

According to the tool changing device of a third aspect, the plurality of grip arms includes the grip portions that are located below an outer circumference of the magazine body in a vertical direction.

Since the plurality of grip arms have grip portions that are located below the outer circumference of the magazine body in the vertical direction, the grip arms are attached to the magazine body at not-so-large intervals. The tool changing device can, therefore, hold a larger number of tools.

According to the tool changing device of a fourth aspect, an angle of inclination for the shaft line of the magazine body toward a side of the main shaft head with respect to the vertical line is in a range between 20 to 50 degrees.

The magazine body supported by the column in an inclined state can hold a larger number of tools. If, however, the angle of inclination becomes too large, imbalance may be caused in the weight of the column. The tool changing device can consider the balance in the weight of the column and can hold a large number of tools. Note that the angle of inclination for the rotation shaft line of the magazine body with respect to the vertical line may be in the range between 20 to 50 degrees or, more preferably, between 30 to 40 degrees.

Moreover, a working machine according to the fifth aspect includes the tool changing device according to any one of the first to fourth aspects.

The working machine can suppress imbalance in the weight of the column and accurately perform positioning control for the column by employing the tool changing device in which the attachment position to the column is considered.

### Brief Description of the Several Views of the Drawings

FIG. 1 is a perspective view illustrating the entire configuration of a working machine;
FIG. 2 is a front view illustrating the entire configuration of the working machine;
FIG. 3 is a right-side view illustrating the entire configuration of the working machine;
FIG. 4 is a partial section view of a main shaft head;
FIG. 5 is an enlarged perspective view of a grip arm;
FIG. 6 is a perspective view illustrating the entire configuration of a working machine according to a modification in a manner not falling under the scope of the claims;
FIGS. 7A and 7B are a right-side view and a top view, respectively, each illustrating a tool magazine and a grip arm configuring a tool changing device; and
FIGS. 8A and 8B are a right-side view and a top view, respectively, each illustrating a tool magazine and a grip arm configuring a tool changing device according to a modification, in a manner not falling under the scope of the claims.

### Detailed Description of the Invention

An embodiment will be described below in detail with reference to the drawings.

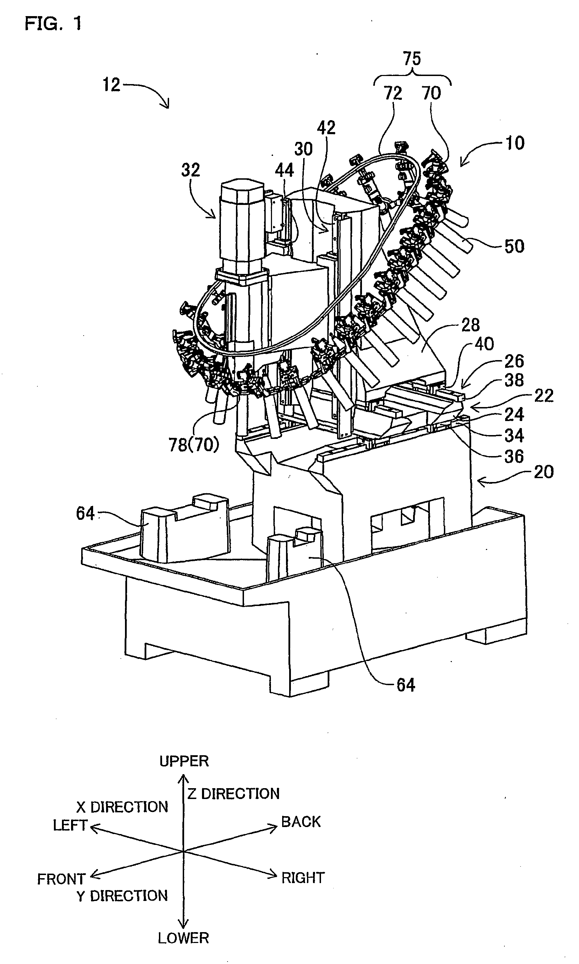

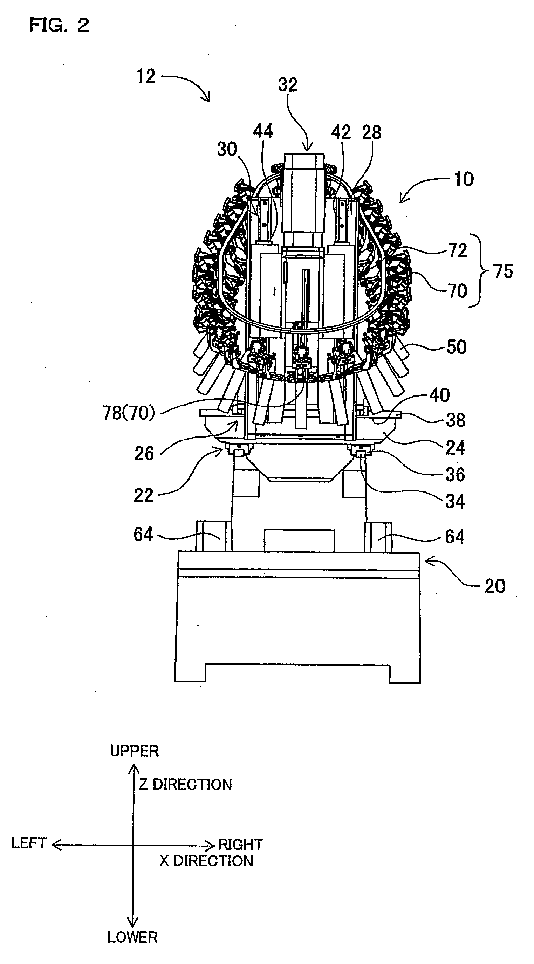

Referring to FIGS. 1 to 3, a working machine 12 including a tool changing device 10 will be described. In the present embodiment, the left, right, front, back, upper and lower sides in FIG. 2 correspond to the left, right, front, back, upper and lower parts of the working machine 12, respectively. The left-to-right direction, front-to-back direction and upper-to-lower direction correspond to X, Y and Z directions, respectively.

The working machine 12 includes a base 20 installed on a floor surface, a carriage 24 arranged on the base 20 through a Y-direction moving device 22, a column 28 arranged on the carriage 24 though an X-direction moving device 26 and a main shaft head 32 arranged on the front surface of the column 28 through a Z-direction moving device 30.

The Y-direction moving device 22 includes a pair of Y-direction guide rails 34 extending in the Y direction on the upper surface of the base 20 and a plurality of Y-direction sliding members 36 arranged on the lower surface of the carriage 24 so as to be engageable with the pair of Y-direction guide rails 34. The Y-direction moving device 22 moves the carriage 24 to an arbitrary position in the Y direction by driving a Y-direction motor (not shown).

The X-direction moving apparatus 26 includes a pair of X-direction guide rails 38 extending in the X direction on the upper surface of the carriage 24 and a plurality of X-direction sliding members 40 arranged on the lower surface of the column 28 so as to be engageable with the pair of X-direction guide rails 38. The X-direction moving device 26 moves the column 28 to an arbitrary position in the X direction by driving an X-direction motor (not shown).

The Z-direction moving device 30 includes a pair of Z-direction guide rails 42 extending in the Z direction on the front surface of the column 28 and a plurality of Z-direction sliding members 44 arranged on the back surface of the main shaft head 32 so as to be engageable with the pair of Z-direction guide rails 42. The Z-direction moving device 30 moves the main shaft head 32 to an arbitrary position in the Z direction by driving a Z-direction motor (not shown).

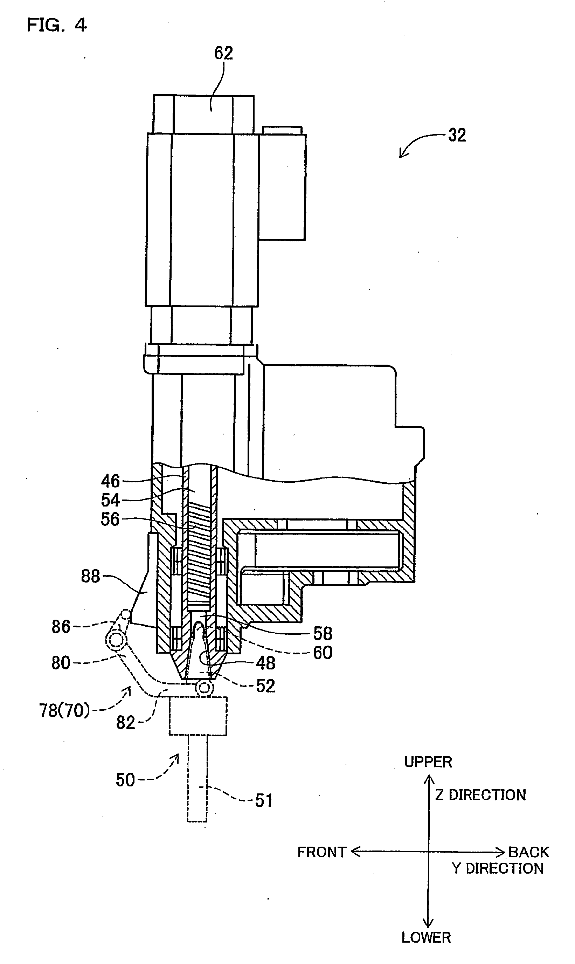

The three moving devices 22, 26 and 30 control the driving of each of the motors in the X, Y and Z directions, respectively, to move the main shaft head 32 to an arbitrary position on the base 20. As shown in FIG. 4, the main shaft head 32 rotatably holds, at the inner front side, a main shaft 46 extending in the Z direction. The main shaft 46 detachably holds, at the lower end, a tool holder 50 to which a tool 51 is attached. The main shaft 46 has a hollow shape. The main shaft 46 has a taper hole 48 formed at the lower end on the inner circumference of the hollow shape, the taper hole 48 having an inner diameter increasing downward. To the taper hole 48, a taper attachment portion 52 formed at an upper part of the tool holder 50 may be attached.

The main shaft 46 has a draw bar 54 at the upper part of the inside taper hole 48. The draw bar 54 is movable in the axial direction of the main shaft 46. Around the draw bar 54, a clamp spring 56 is arranged. The clamp spring 56 biases the draw bar 54 upward by the elastic force thereof. At the lower end of the draw bar 54, a collet chuck 58 is provided. When the taper attachment portion 52 of the tool holder 50 is attached to the taper hole 48 of the main shaft 46, the collet chuck 58 grasps a pull stud 60 protruding upward from the taper attachment portion 52.

A pressing mechanism (not shown) is provided at the upper part of the draw bar 54 and can press the drawbar 54 downward. As the pressing mechanism presses the draw bar 54 downward against the elastic power of the clamp spring 56, the collet chuck 58 releases the grasped pull stud 60. The collet chuck 58 releasing the grasped pull stud 60 allows the tool holder 50 to be disengaged from the main shaft 46.

The main shaft 46 is connected to a main shaft motor 62 arranged at the upper end of the main shaft head 32. The main shaft 46 rotates around the shaft center by driving the main shaft motor 62. The main shaft 46 rotates around the shaft center while the tool holder 50 is attached at the lower end thereof, to perform work on a workpiece (not shown) fixed on the base 20. The workpiece is fixedly arranged on a table (not shown) supported by a pair of table supporting platforms 64 provided in front of the base 20.

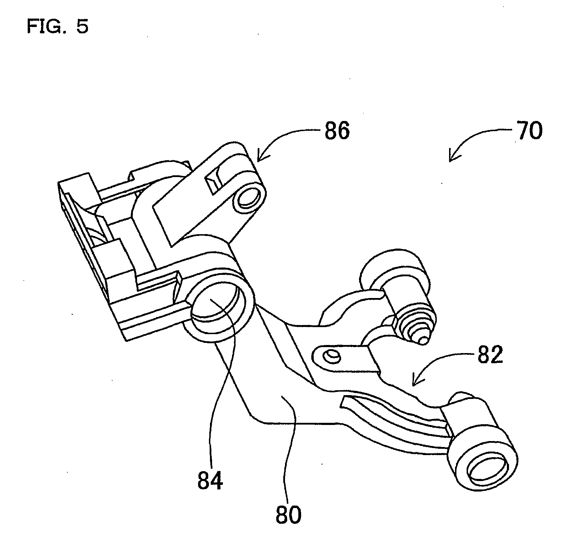

As illustrated in FIGS. 1 to 3, the tool changing device 10 includes an annular tool magazine 75 that holds the tool holder 50 and a magazine motor (not shown) that rotatably drives the tool magazine 75. The tool magazine 75 includes a plurality of (e.g., twenty-three) grip arms 70 (see FIG. 5) each gripping the tool holder 50, an annular holding chain 72 that holds the plurality of grip arms 70 at even intervals and an annular chain case (not shown) that holds the holding chain 72. The annular chain case is arranged such that the holding chain 72 encloses the outer circumferential surfaces of the column 28 and the main shaft head 32. The chain case is fixed to the column 28. The main shaft head 32 is positioned at the inside of the annular tool magazine 75 and is movable in the Z direction.

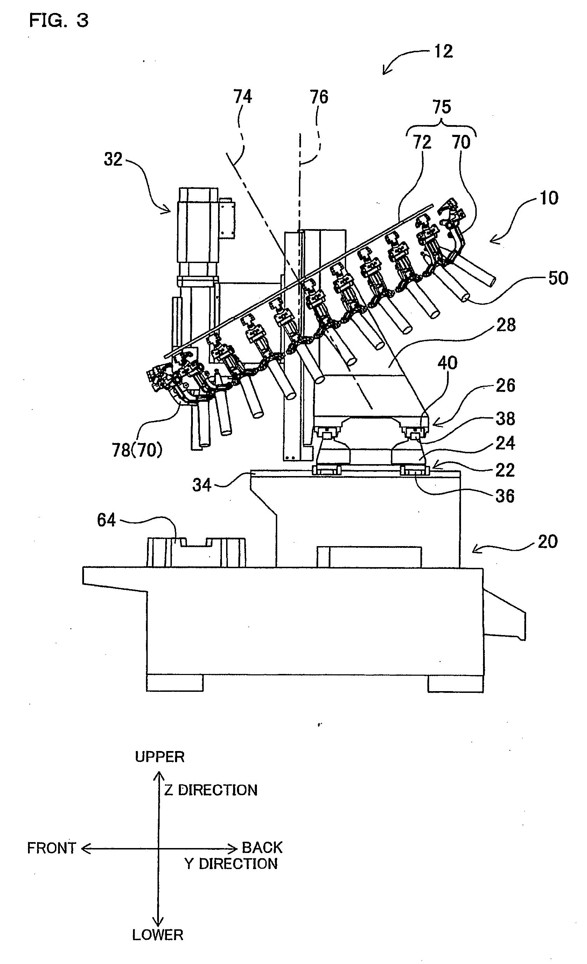

The holding chain 72 is rotatable around a shaft center 74 of the holding chain 72 while being held in the chain case. The shaft center 74 is inclined by 30 degrees toward the main shaft head 32 with respect to a vertical line 76 (see FIG. 3). That is, the holding chain 72 is inclined by 30 degrees toward the counter-clockwise direction (in FIG. 3) with respect to the horizontal surface. The magazine motor rotates and drives the holding chain 72. By the drive of the magazine motor, the tool changing device 10 selects an arbitrary one of the plurality of grip arms 70 held by the holding chain 72 and allocates it to a tool changing position below the main shaft 46.

As shown in FIG. 5, the grip arm 70 includes an arm body 80 bent in a substantially L-shape and a Y-shaped grip portion 82 that is continuous to one end of the arm body 80 and grips the tool holder 50. The grip portion 82 grips a groove portion (not shown) formed at an outer diameter portion of the tool holder 50. The holding chain 72 holds the grip arm 70 to be oscillatable through a support shaft 84. The grip arm 70 is provided with a cam follower 80 arranged in the vicinity of the support shaft 84 of the arm body 80. As shown in FIG. 4, the cam follower 86 slides on a cam surface 88 provided at the lower end of the front face of the main shaft head 32. The cam follower 86 of the grip arm 70 allocated to the tool changing position slides along the cam surface 88 as the main shaft head 32 moves up and down in the Z direction. Such sliding causes the grip arm 70 at the tool changing position to oscillate around the support shaft 84.

More specifically, the cam surface 88 is formed to have a larger amount of protrusion from the front surface of the main shaft head 32 toward the lower side thereof. Thus, when the main shaft head 32 moves upward, the amount of protrusion of the cam surface 88 along which the cam follower 86 slides is increased. When the main shaft head 32 moves upward, the cam surface 88 biases the cam follower 88 along the cam surface 88 toward the direction departing from the main shaft head 32. The grip arm 70 then oscillates around the support shaft 84 and the grip portion 82 approaches the main shaft head 32. The grip portion 82 holds the tool holder 50 to which the main shaft 46 is attached. The main shaft 46 releases the tool holder 50 by the pressing mechanism described earlier. When the main shaft head 32 moves to the top, the grip portion 82 of the grip arm 70 is positioned directly below the lower end of the main shaft 46. Accordingly, it is possible that the grip portion 82 of the grip arm 70 holds the tool holder 50 attached to the main shaft 46.

When the main shaft head 32 moves downward, the amount of protrusion of the cam surface 88 along which the cam follower 86 slides is reduced. Hence, the cam surface 88 biases the cam follower 86 toward the direction in which the cam follower 86 approaches the main shaft head 32, making the grip arm 70 oscillate around the support shaft 84 and the grip portion 82 depart from the main shaft head 32. The main shaft 46 attaches thereto the tool holder 50 held by the grip arm 70. The grip portion 82 releases the tool holder 50. While the main shaft head 32 moves downward, the grip arm 70 does not interfere with the main shaft head 32 and the like.

Such a structure allows the tool changing device 10 to exchange the tool holders 50 between the tool magazine 75 and the main shaft 46. By attaching the tool magazine 75 to the column 28, the tool changing device 10 can shorten the time required for tool changing and efficiently change the tool holder 50.

The tool magazine 75 holding a plurality of tool holders 50 is formed to have an annular holding chain 72. The holding chain 72 is attached to the column 28 to surround the outer circumferences of the column 28 and main shaft head 32. In the tool changing device 10, therefore, the barycentric position of the column 28 in a state where the tool magazine 75 is being attached can become closer to the barycentric position of the column 28 in a state where the tool magazine 75 is not being attached. In the tool changing device 10, the tool magazine 75 is attached to the column 28 to suppress imbalance in the weight of the column 28. The tool changing device 10 can, therefore, prevent deterioration in the accuracy of positioning control for movement of the column 28 when mounted to the column-moving working machine 12.

Moreover, in the tool changing device 10, the holding chain 72 is arranged to enclose the outer circumference of the main shaft head 32 provided on the column 28. This allows the tool changing device 10 to increase the length of the holding chain 72 and to attach a number of grip arms 70. Hence, the tool changing device 10 can hold a large number of tool holders 50.

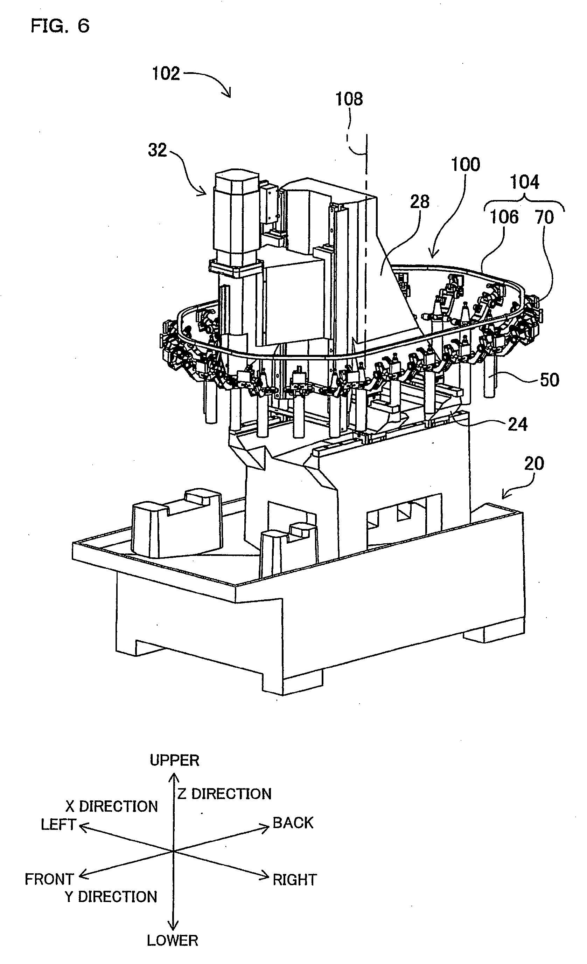

Furthermore, the tool magazine 75 is attached to the column 28 in such a state that the holding chain 72 is inclined toward the counter-clockwise direction (in FIG. 3) with respect to the horizontal surface by 30 degrees. The tool magazine may be horizontally attached to a column, in a manner not falling under the appended claims. Referring to FIG. 6, a tool changing device 100 in a modification will now be described. A working machine 102 provided with a modified tool changing device 100 has a configuration substantially similar to the working machine 12 described above, except for a tool magazine 104. The tool changing device 100 will therefore be described mainly for the tool magazine 104, while other components will be denoted by the same reference codes and will not be described in detail.

The tool changing device 100 includes the tool magazine 104. The tool magazine 104 includes a plurality of (e.g., twenty-two) grip arms 70 gripping the tool holders 50, an annular holding chain 106 holding the plurality of grip arms 70 at regular intervals, and an annular chain case (not shown) holding the holding chain 106. The holding chain 106 may be rotatable around a shaft center 108 of the holding chain 106 while held in the chain case. The annular chain case is arranged such that the holding chain 106 encloses the outer circumferential surfaces of the column 28 and the main shaft head 32. The chain case is fixed to the column 28. Since the shaft center 108 of the holding chain 106 extends in a vertical direction, the holding chain 106 is horizontally arranged.

The holding chain 106 for the tool magazine 104 is formed in an annular shape. The holding chain 106 is attached to the column 28 so as to enclose the outer circumferences of the column 28 and the main shaft head 32. The tool changing device 100 can, therefore, suppress imbalance in the weight of the column 28. The number of tool holders 50 which the tool magazine 75 of the tool changing device 10 can hold is larger than the number of tool holders 50 which the tool magazine 104 of the tool changing device 100 can hold.

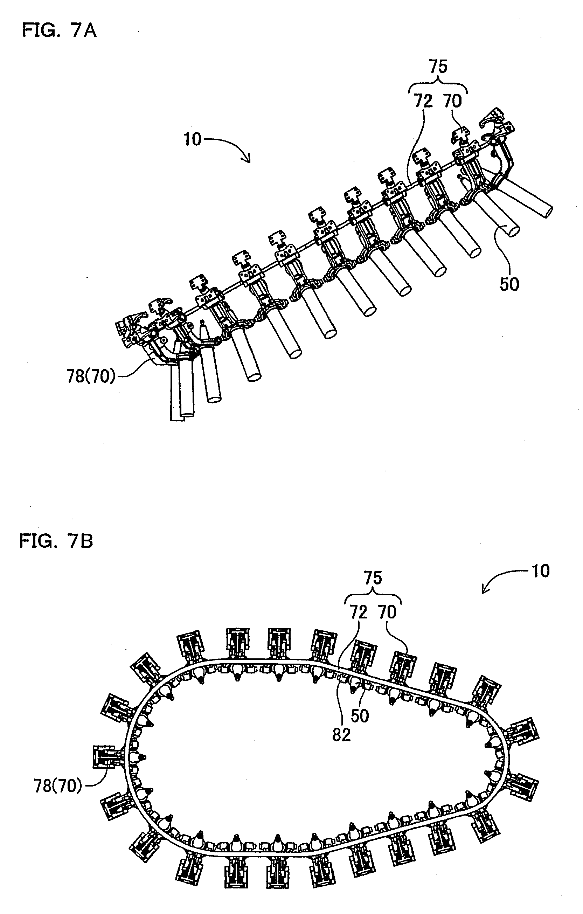

The tool magazine 75 in the claimed embodiment is attached to the column 28 while, as described above, the holding chain 72 is inclined toward the counter-clockwise direction (in FIG. 3) with respect to the horizontal surface by 30 degrees. In the tool magazine 75, the grip arm 70 is provided to the holding chain 72 such that the tool 51 extends in a direction perpendicular to the horizontal surface at the tool changing position. Since the holding chain 72 is inclined as shown in FIG. 7A, the end of the tool 51 is positioned outside the holding chain 72. The position of the grip portion 82 of the grip arm 70 approximately matches with the position of the holding chain 72 when viewed from the top (reference to FIG.7B). That is, for the grip arm 70, the grip portion 82 takes a position below the outer circumference of the holding chain 72 in the vertical direction.

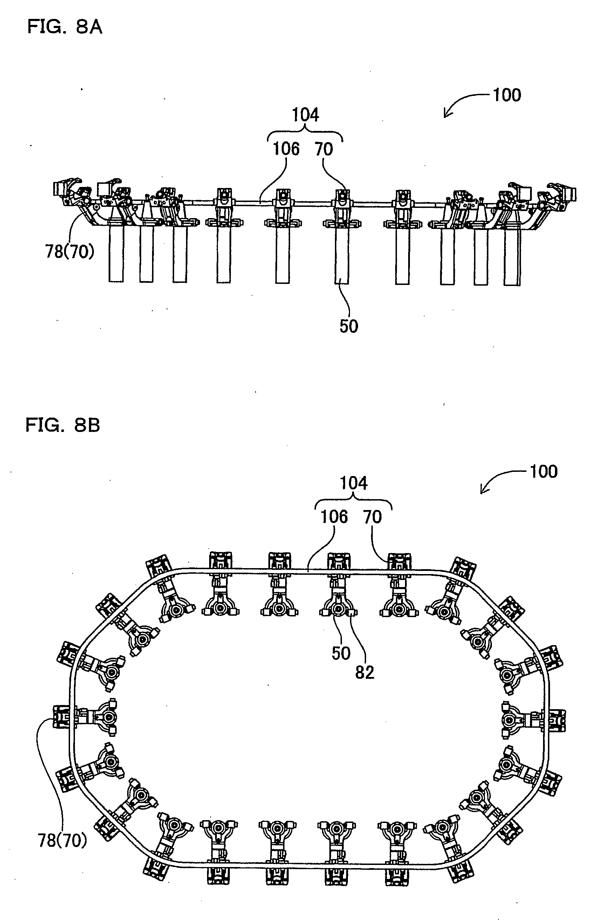

As for the tool magazine 104 in the modification not falling under the scope of the appended claims, the holding chain 106 is attached to the column 28. The tool magazine 104 includes the grip arm 70 at the holding chain 106, so that the tool 51 extends in a direction perpendicular to the horizontal surface at the tool changing position. Since the grip arm 70 holds the tool holder 50 such that the tool 51 extends in the vertical direction inside the holding chain 106 as shown in FIG.8A, the grip portion 82 of the grip arm 70 is positioned more inside than the holding chain 106 when viewed from the top (reference to FIG.8B). The tool magazine 104 can hold twenty-two tool holders 50.

Since the grip portion 82 of tool magazine 104 is positioned more inside than the holding chain 106, in order to attach the grip portions 82 to the holding chain 106 without interference of respective grip portions 82, interval of attachment positions must be widened. Since the grip portion 82 is positioned below the outer circumference of the holding chain 72 in the vertical direction, the interval of attachment positions is smaller than that in the tool magazine 104. Hence, the tool magazine 75 can be provided with a larger number of grip arms 70 by the holding chain 72.

As shown in FIGS. 7B and 8B, the tool magazine 75 is made more compact than the tool magazine 104 of the modification, but can hold a larger number of tool holders 50 compared to the tool magazine 104 of the modification. The tool changing device 10 can be made more compact and can hold a larger number of tools by inclining the tool magazine 75 and attaching it to the column 28.

Though the holding chains 72 and 106 that are deformable are employed as the magazine body described above, an annular member may also be employed, for example, as the magazine body. The magazine body may be configured to have an annular member rotating around a shaft center. For the holding chains 72 and 106 described above, chains formed with various kinds of materials, such as a rubber chain, a metal chain and the like may also be employed.

The holding chain 72 is inclined by 30 degrees toward the main shaft head 32 from the vertical line 76 of the shaft line 74. The present invention is not limited to this angle but may be set at any angle of inclination. The larger the angle of inclination is within 90 degrees, the more tools the holding chain 72 can hold. If, however, the angle becomes too large, bias may be caused in the balance of the weight of the column supporting the tool magazine 75. The angle of inclination is, therefore, preferably set in the range between 20 and 50 degrees. More preferably, the angle may be set in the range between 30 and 40 degrees.

## Claims

1. A tool changing device (10) for a working machine (12), comprising:
a column (28) provided to be movable on a base (20) of the working machine (12);
a main shaft head (32) provided to the column (28) so as to be able to move upward and downward;
a main shaft (46) rotatably supported by the main shaft head (32) and detachably holding a tool (51);
a plurality of grip arms (70) each having a grip portion (82) holding the tool (51); and
a magazine body (72) provided with the plurality of grip arms (70) at an outer circumference of the magazine body (72) and rotatably supported around one shaft line (74) by the column (28),
the tool changing device (10) allocating the tool (51) held by the grip portion (82) of each of the plurality of grip arms (70) to a position at which the tool (51) can be attached to a lower end of the main shaft (46) by rotation of the magazine body (72), wherein
the magazine body (72) is formed to have an annular shape enclosing an outer circumference of the column (28), **characterized in that**
the magazine body (72) is formed by a holding chain holding the plurality of grip arms (70) and that the magazine body (72) is fixed to the column (28) in such a manner that the shaft line (74) is inclined toward the main shaft head (32) with respect to a vertical line (76).

2. The tool changing device according to Claim 1, wherein the main shaft head (32) is provided at the column (28) such that the main shaft head (32) can move upward and downward along an inside of the magazine body (72) fixed to the column (28).

3. The tool changing device according to Claim 1 or 2, wherein the plurality of grip arms (70) arranged at the inclined magazine body (72) includes the grip portions (82) that are located below an outer circumference of the magazine body (72) in a vertical direction.

4. The tool changing device according to any of Claims 1 to 3, wherein an angle of inclination for the shaft line (74) of the magazine body (72) toward a side of the main shaft head (32) with respect to the vertical line (76) is in a range between 20 to 50 degrees.

5. A working machine, **characterized by** comprising the tool changing device (10) according to any one of Claims 1 to 4.

## Patentansprüche

1. Werkzeugwechselvorrichtung (10) für eine Arbeitsmaschine (12), aufweisend:
eine Säule (28), die vorgesehen ist, auf einem Bett (20) der Arbeitsmaschine (12) beweglich zu sein;
einen Hauptwellenkopf (32), der an der Säule (28) so vorgesehen ist, in der Lage zu sein, sich aufwärts und abwärts zu bewegen;
eine Hauptwelle (46), die durch den Hauptwellenkopf (32) drehbar gelagert ist und ein Werkzeug (51) abnehmbar hält;
eine Mehrzahl von Greifarmen (70), von denen jeder einen Greifabschnitt (82) hat, der das Werkzeug (51) hält; und
einen Magazinkörper (72), der an dem äußeren Umfang des Magazinkörpers (72) mit der Mehrzahl von Greifarmen (70) vorgesehen ist und durch die Säule (28) um eine Wellenlinie (74) drehbar gelagert ist,
die Werkzeugwechselvorrichtung (10), die das durch den Greifabschnitt (82) von jedem der Mehrzahl der Greifarme (70) gehaltene Werkzeug (51) durch eine Rotation des Magazinkörpers (72) einer Position zuordnet, an der das Werkzeug (51) an ein unteres Ende der Hauptwelle (46) angebracht werden kann, wobei
der Magazinkörper (72) gebildet ist, eine ringartige Form zu haben, die einen äußeren Umfang der Säule (28) umschließt, **dadurch gekennzeichnet, dass**
der Magazinkörper (72) durch eine Haltekette gebildet wird, die die Mehrzahl von Greifarmen (70) hält, und dass der Magazinkörper (72) in einer solchen Weise an der Säule (28) befestigt ist, dass die Wellenlinie (74) bezüglich einer vertikalen Linie (76) zu dem Hauptwellenkopf (32) hin geneigt ist.

2. Werkzeugwechselvorrichtung gemäß Anspruch 1, wobei der Hauptwellenkopf (32) an der Säule (28) so angebracht ist, dass sich der Hauptwellenkopf (32) entlang eines Inneren des an der Säule (28) befestigten Magazinkörpers (72) aufwärts und abwärts bewegen kann.

3. Werkzeugwechselvorrichtung gemäß Anspruch 1 oder 2, wobei die Mehrzahl von an dem geneigten Magazinkörper (72) angebrachten Greifarmen (70) die Greifabschnitte (82) enthält, die sich in einer vertikalen Richtung unterhalb eines äußeren Umfangs des Magazinkörpers (72) befinden.

4. Werkzeugwechselvorrichtung gemäß einem der Ansprüche 1 bis 3, wobei ein Neigungswinkel für die Wellenlinie (74) des Magazinkörpers (72) bezüglich der vertikalen Linie (76) zu einer Seite des Hauptwellenkopfs (32) hin in einem Bereich zwischen 20 und 50 Grad ist.

5. Arbeitsmaschine, **gekennzeichnet durch** Aufweisen der Werkzeugwechselvorrichtung (10) gemäß einem der Ansprüche 1 bis 4.

## Revendications

1. Dispositif de changement d'outil (10) pour une machine de travail (12), comprenant :
une colonne (28) prévue pour être mobile sur une base (20) de la machine de travail (12) ;
une tête d'arbre principal (32) prévue sur la colonne (28) afin de pouvoir monter et descendre ;
un arbre principal (46) supporté en rotation par la tête d'arbre principal (32) et supportant de manière détachable un outil (51) ;
une pluralité de bras de préhension (70), ayant chacun une partie de préhension (82) maintenant l'outil (51) ; et
un corps de magasin (72) prévu avec la pluralité de bras de préhension (70) au niveau d'une circonférence externe du corps de magasin (72) et supporté en rotation autour de la ligne d'arbre (74) par la colonne (28),
le dispositif de changement d'outil (10) positionnant l'outil (51) maintenu par la partie de préhension (82) de chacun de la pluralité de bras de préhension (70) dans une position dans laquelle l'outil (51) peut être fixé sur une extrémité inférieure de l'arbre principal (46) par la rotation du corps de magasin (72), dans lequel :
le corps de magasin (72) est formé pour avoir une forme annulaire enfermant une circonférence externe de la colonne (28), **caractérisé en ce que** :
le corps de magasin (72) est formé par une chaîne de support supportant la pluralité de bras de préhension (70) et **en ce que** le corps de magasin (72) est fixé sur la colonne (28) de sorte que la ligne d'arbre (74) est inclinée vers la tête d'arbre principal (32) par rapport à une ligne verticale (76).

2. Dispositif de changement d'outil selon la revendication 1, dans lequel la tête d'arbre principal (32) est prévue au niveau de la colonne (28) de sorte que la tête d'arbre principal (32) peut monter et descendre le long d'un intérieur du corps de magasin (72) fixé sur la colonne (28).

3. Dispositif de changement d'outil selon la revendication 1 ou 2, dans lequel la pluralité de bras de préhension (70) agencés au niveau du corps de magasin (72) incliné comprend les parties de préhension (82) qui sont positionnées au-dessous d'une circonférence externe du corps de magasin (72) dans une direction verticale.

4. Dispositif de changement d'outil selon l'une quelconque des revendications 1 à 3, dans lequel un angle d'inclinaison pour la ligne d'arbre (74) du corps de magasin (72) vers un côté de la tête d'arbre principal (32) par rapport à la ligne verticale (76) est compris entre 20 et 50 degrés.

5. Machine de travail, **caractérisée en ce qu'**elle comprend le dispositif de changement d'outil (10) selon l'une quelconque des revendications 1 à 4.
